(19) Europäisches Patentamt
European Patent Office
Office européen des brevets

(11) **EP 1 635 150 B1**

(12) **EUROPÄISCHE PATENTSCHRIFT**

(45) Veröffentlichungstag und Bekanntmachung des Hinweises auf die Patenterteilung:
**30.10.2013 Patentblatt 2013/44**

(51) Int Cl.:
***G01F 1/32*** *(2006.01)*

(21) Anmeldenummer: **05019456.2**

(22) Anmeldetag: **07.09.2005**

(54) **Karman-Wirbel-Strömungsmesser**

Flow meter utilizing Karman vortices

Débitmètre utilisant des vortices de Karman

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.09.2004 DE 102004044146**

(43) Veröffentlichungstag der Anmeldung:
**15.03.2006 Patentblatt 2006/11**

(73) Patentinhaber:
• **Bürkert Werke GmbH**
**74653 Ingelfingen (DE)**
• **Bürkert & Cie. S.A.R.L.**
**67220 Triembach-au-Val (FR)**

(72) Erfinder: **Beck, Michel**
**67120 Emolsheim/Bruche (FR)**

(74) Vertreter: **Prinz & Partner**
**Patentanwälte**
**Rundfunkplatz 2**
**80335 München (DE)**

(56) Entgegenhaltungen:
**EP-A- 0 446 023      EP-A- 1 085 301**
**DE-A1- 3 601 407     US-A1- 2003 028 334**

• **MENZ B ET AL: "VORTEX-DURCHFLUSSMESSER MIT AKUSTISCHER WIRBELDETEKTION IN CLAMP- ON-TECHNIK" TECHNISCHES MESSEN TM, R.OLDENBOURG VERLAG. MUNCHEN, DE, Bd. 64, Nr. 2, Februar 1997 (1997-02), Seiten 54-59, XP000692147 ISSN: 0171-8096**

**Beschreibung**

Die Erfindung betrifft einen Durchflussmesser für gasförmige Medien und ein Verfahren zur Durchflussmessung gasförmiger Medien.

Zur direkten berührungslosen Durchflussmessung gasförmiger Medien kommen verschiedene physikalische Effekte in Betracht. Bei einem thermischen Verfahren wird die durch das Medium verursachte Abkühlung eines in einer Messbrücke angeordneten Heizwiderstands erfasst und ausgewertet. Bei Verwendung einer Coanda-Düse wird eine durch die Strömung verursachte Druckdifferenz gemessen und ausgewertet. Möglich ist auch die Vortex-Methode, bei der durch einen vom Medium umströmten Störkörper Wirbel erzeugt werden und die durch die Wirbel verursachte Frequenzverschiebung eines quer zur Strömungsrichtung gesendeten Schallsignals gemessen wird. Jedes dieser Verfahren hat Vor- und Nachteile. Die erstgenannten Verfahren reagieren langsam auf Änderungen des Durchflusses und sind nur bei relativ kleinen (thermisch) oder großen (Coanda) Durchflussraten geeignet. Letzteres Verfahren ist messtechnisch schwierig, weil die durch die Wirbel verursachten Frequenzänderungen sehr klein sind und das Nutzsignal gegenüber dem  Erregungssignal, das durch den Körper der Messkammer auch direkt zum Empfänger übertragen wird, eine sehr geringe Amplitude hat.

Aus der DE 36 01 407 A1 ist ein Durchflussmesser für eine Fluidströmung bekannt, bei dem in einem Rohrleitungsabschnitt eine Messkammer gebildet ist, in der ein Störkörper angeordnet ist. Ein Ultraschallsender ist an der Messkammer stromabwärts von dem Störkörper angeordnet. Ein Ultraschallempfänger ist an der Messkammer dem Ultraschallsender gegenüberliegend angeordnet. Dieser Durchflussmesser arbeitet nach dem Vortex-Prinzip. Das von dem Ultraschallempfänger aufgenommene Messsignal wird mittels eines Synchron-Demodulators demoduliert, auf den ein Tiefpassfilter zur Signalaufbereitung folgt. Alternativ wird vorgeschlagen, das Messsignal mit dem Sendesignal zu multiplizieren.

Weiterhin ist aus der US 2003/0028334 A1 ein Verfahren zur Durchflussmessung strömender Medien bekannt, das zwar nach den Vortex-Prinzip arbeitet, jedoch die Druckschwankungen in dem fluiden Medium direkt misst. Das sehr schwache Vortex-Signal wird durch ein digitales Filter herausgefiltert. Damit das digitale Filter nicht auf Störsignale anspricht, wird die Amplitude des Vortex-Signals gesondert gemessen, und nur bei Überschreitung eines bestimmten Schwellwerts wird das digitale Filter aktiviert. Die Amplitude des Vortex-Signals wird mittels eines Pegeldetektors ermittelt, der bei einer bestimmten Ausführungsform eine Quadrierung des Signals und eine anschließende Filterung vornimmt.

Die Erfindung macht gleichfalls von der Vortex-Methode Gebrauch, für die sie eine besonders vorteilhafte Signalauswertung vorschlägt.

Der erfindungsgemäße Durchflussmesser für gasförmige Medien hat einen Sensor, der eine Messkammer aufweist, in der ein Störkörper angeordnet ist. Ein Ultraschallsender ist an der Messkammer stromabwärts von dem Störkörper angeordnet ist. Ein Ultraschallempfänger ist an der Messkammer dem Ultraschallsender gegenüberliegend angeordnet. Eine Signalverarbeitungseinrichtung quadriert das vom Ultraschallempfänger aufgenommene Meßsignal und demoduliert es durch Filterung, insbesondere Bandpassfilterung. Die Frequenz des so gewonnenen Nutzsignals ist proportional zum aktuellen Durchfluss des Mediums in der Messkammer. Die Signalverarbeitungseinrichtung wird in vorteilhafter Weise durch einen digitalen Signalprozessor gebildet. Die Erfindung beruht auf der Erkenntnis, dass es nicht notwendig ist, das Ultraschall-Erregungssignal durch aufwendige mechanische Maßnahmen vom Körper der Messkammer zu entkoppeln, um so die Amplitude des durch Körperschall direkt zum Empfänger übertragenen Erregungssignals in Relation zur Amplitude des die Messkammer durchquerenden Nutzsignals abzusenken, da die von den Wirbeln hinter dem Störkörper erzeugte Frequenzverschiebung durch eine besondere Signalverarbeitung auch bei sehr kleiner Amplitude des Nutzsignals zuverlässig detektiert werden kann.

Gegenstand der Erfindung ist ferner ein Verfahren zur Durchflussmessung gasförmiger Medien, bei dem in einer vom Medium durchströmten Messkammer ein Störkörper angeordnet und stromabwärts von dem Störkörper ein Ultraschall-Erregungssignal quer zur Strömungsrichtung durch die Messkammer geschickt wird. Das Ultraschall-Erregungssignal wird nach Durchquerung der Messkammer gemeinsam mit dem als Körperschall übertragenen Ultraschall-Erregungssignal erfasst. Das erfaßte Signal wird erst quadriert und dann mit einem Filter  demoduliert. Aus der Frequenz des demodulierten Signals wird eine Anzeigegröße für den Durchfluß durch die Messkammer abgeleitet.

Weitere Vorteile und Merkmale der Erfindung ergeben sich aus der nachfolgenden Beschreibung einer vorteilhaften Ausführungsform unter Bezugnahme auf die beigefügten Zeichnungen. In den Zeichnungen zeigen:

Fig. 1 schematisch einen Sensor zum Messen eines Gasdurchflusses;

Fig. 2 ein Diagramm zur Veranschaulichung der zur Durchflussmessung genutzten Modulation;

Fig. 3 ein Diagramm zur Veranschaulichung des Funktionsprinzips des Durchflussmessers; und

Fig. 4 ein Blockdiagramm des Durchflussmessers.

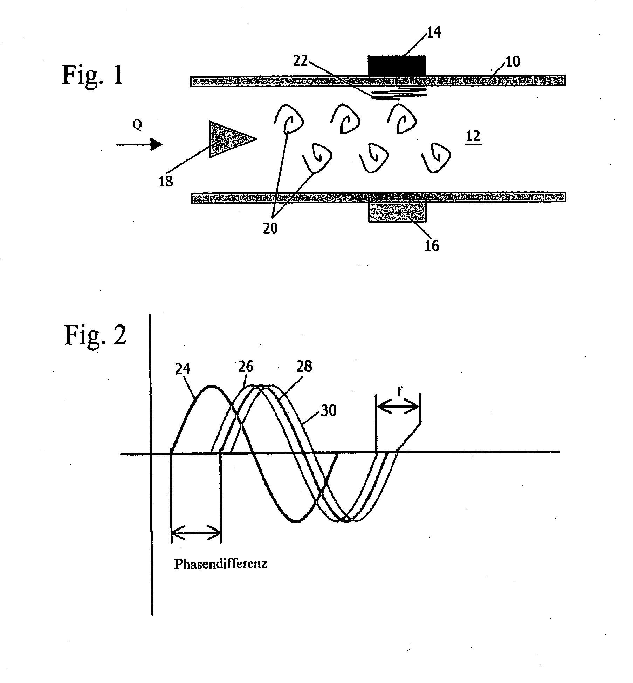

Der in Fig. 1 schematisch dargestellte Sensor enthält einen Rohrabschnitt 10, dessen Innenraum 12 eine Messkammer bildet. Am Außenumfang des Rohrabschnitts 10 sind zwei Ultraschallwandler 14, 16 einander diametral gegenüberliegend und in direktem mechanischen Kontakt mit dem Körper des Rohrabschnitts 10 angebracht. Der Ultraschallwandler 14 ist ein Sendewandler, der Ultraschallwandler 16 ein Empfangswandler. In der Messkammer 12 ist ein Störkörper 18 stromaufwärts von den Wandlern 14, 16 angeordnet. Der Störkörper 18 ist mittig im Gasstrom Q angeordnet, der die Messkammer 12 axial durchströmt, und erzeugt in diesem Wirbel 20, die in verschiedenen Richtungen rotieren und sich von dem Störkörper 18 ablösen. Der Sendewandler 14 schickt eine Ultraschallwelle 22 senkrecht durch den Gasstrom Q. Die Ultraschallwelle 22 wird durch die Wirbel 20 in Phase und Amplitude moduliert, da die Wirbel die Ultraschallwelle abwechselnd beschleunigen und verlangsamen. Die Ablösefrequenz der Wirbel 20 ist proportional der Strömungsgeschwindigkeit des Gasstroms Q. Durch Messung der Variationsgeschwindigkeit der vom Empfangswandler 16 empfangenen Ultraschallwelle, nachdem diese den Gasstrom durchquert hat, erhält man die Strömungsgeschwindigkeit und kann daraus den Durchfluss bestimmen.

Fig. 2 zeigt als Sinuskurve 24 die vom Sendewandler 14 ausgehende Ultraschallwelle und als Sinuskurven 26, 28, 30 die in der Phase durch die Wirbel 20 modulierte Ultraschallwelle, die vom Empfangswandler 16 aufgenommen wird. Der Zeitabstand zwischen den Sinuskurven 26, 30 entspricht einer Modulationsfrequenz f.

Allerdings nimmt der Empfangswandler 16 nicht nur das "Nutzsignal" auf, das die vom Sendewandler 14 abgestrahlte Ultraschallwelle nach Durchqueren des Gasstroms Q erzeugt, sondern auch das unmittelbar über den metallischen Körper des Rohrabschnitts 10 als Körperschall empfangene Sendesignal, dessen Amplitude viel größer ist als die des Nutzsignals. Durch die erfindungsgemäß vorgeschlagene Signalverarbeitung wird dennoch eine zuverlässige Bestimmung der Modulationsfrequenz f des Nutzsignals ermöglicht, die proportional zu dem gesuchten Durchfluss ist.

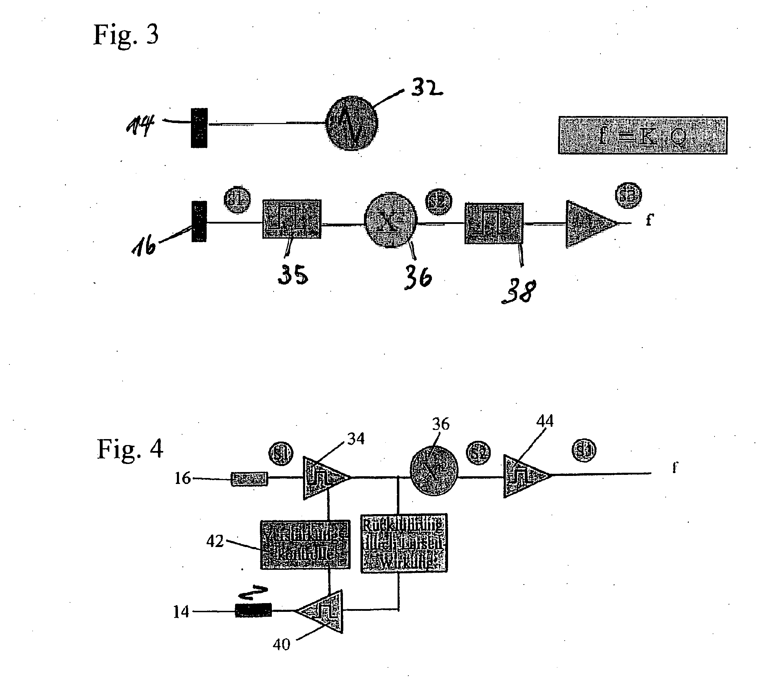

Das Prinzip der Signalverarbeitung wird aus Fig. 3 deutlich. Der Sendewandler 14 wird von einem Oszillator 32 mit einem Ultraschall-Erregungssignal von z.B. 300.000 Hz angesteuert. Der Empfangswandler 16 nimmt das vom Sendewandler 14 abgestrahlte Signal auf, nachdem dieses den Gasstrom durchquert hat. Das Empfangssignal S1 wird mit einem Bandpaßfilter 35 gefiltert und an einen einen Multiplizierer 36 angelegt, der das Signal S1 mit sich selbst multipliziert, d.h. quadriert. Das Ausgangssignal S2 des Multiplizierers 36 wird durch ein Bandpassfilter 38 gefiltert und dadurch zu S3 demoduliert. Die Frequenz f des demodulierten Signals S3 ist proportional zum gesuchten Durchfluss: Q = K*Q, mit K als Konstante.

Dasselbe Prinzip wird bei der in Fig. 4 gezeigten Ausführungsform, jedoch mit einigen weiteren Besonderheiten, angewendet.

Der Sendewandler 14 wird durch einen Verstärker 40 mit Bandpassfilter angesteuert. Auf den Eingang des Verstärkers 40 ist der Ausgang des Verstärkers 34 rückgekoppelt, der ebenfalls ein Bandpassfilter enthält. Da Sendewandler 14 und Empfangswandler 16 auch mechanisch durch den Körper des Rohrabschnitts 10 gekoppelt sind, entsteht eine geschlossene Rückkopplungsschleife durch den sog. Larsen-Effekt. Das aus den mechanisch gekoppelten Ultraschallwandlern 14, 16 und den Verstärkern 34, 40 bestehende System stellt sich auf eine Systemeigenresonanzfrequenz ein, wodurch Fertigungstoleranzen der Wandler kompensiert werden. Eine Verstärkungsregelung 42 sorgt für eine stabile Amplitude des erzeugten Ultraschall-Erregungssignals.

Der Empfangswandler 16 nimmt einerseits das Erregungssignal A sin (a) direkt als Körperschall und andererseits das viel schwächere Nutzsignal B sin (a+b) auf, worin "b" die durch Wirbel verursachte Phasenverschiebung ist. Das Empfangssignal S1 ist somit die Summe beider Signale:

$$S1 = A \sin (a) + B \sin (a+b)$$

Das Signal S1 wird mittels des Multiplizierers 36 mit sich selbst multipliziert, d.h. quadriert zu einem Signal S2. Das ergibt mit den bekannten trigonometrischen Formeln die Summe

$$S2 = (A^2 + B^2)/2 - A^2/2 \cos (2a) - B^2/2\cos (2a+2b) + AB \cos (b) - AB \cos (2a +b).$$

Darin ist der Term AB cos (b) nur von der gesuchten Modulation abhängig. Durch Filterung in einem Verstärker 44 mit Bandpassfilter wird der entsprechende Signalanteil

$$S3 = AB \cos (b)$$

isoliert. Seine Frequenz f ist proportional dem gesuchten Durchfluss:

$$f = K*Q,$$

worin K eine Systemkonstante ist.

Die beschriebene Signalverarbeitung wird mit einem digitalen Signalprozessor durchgeführt. Aus dem Signal S3 bzw. seiner Frequenz f wird ein Anzeigesignal für den aktuellen Durchfluss gebildet.

## Patentansprüche

1. Durchflussmesser für gasförmige Medien, mit einem Sensor, der eine Messkammer (12) aufweist, in der ein Störkörper (18) angeordnet ist, einem Ultraschallsender (14), der an der Messkammer (12) stromabwärts von dem Störkörper (18) angeordnet ist, einem Ultraschallempfänger (16), der an der Messkammer (12) dem Ultraschallsender (14) gegenüberliegend angeordnet ist, und einer Signalverarbeitungseinrichtung (35, 36, 38), die das vom Ultraschallempfänger (16) aufgenommene Meßsignal verarbeitet, **dadurch gekennzeichnet, daß** die Signalverarbeitungseinrichtung (35, 36, 38) einen Multiplizierer (36), der das Meßsignal mit sich selbst multipliziert, und ein Bandpaßfilter (38) aufweist, welches das mit sich selbst multiplizierte Meßsignal demoduliert.

2. Durchflussmesser nach Anspruch 1, bei dem der Ultraschallsender (14) von einem Sendeverstärker (40) angesteuert wird, auf dessen Eingang das durch einen Empfangsverstärker (34) verstärkte Empfangssignal des Ultraschallempfängers (16) rückgekoppelt ist.

3. Durchflussmesser nach Anspruch 2, bei dem der Sendeverstärker (40) ein Bandpassfilter enthält.

4. Durchflussmesser nach Anspruch 2 oder 3, bei dem der Empfangsverstärker (34) ein Bandpassfilter enthält.

5. Durchflussmesser nach einem der Ansprüche 2 bis 4, mit einer Verstärkungsregelung (42), durch welche die Amplitude des an den Ultraschallsender (14) angelegten Sendesignals konstant gehalten wird.

6. Durchflussmesser nach einem der Ansprüche 1 bis 5, bei dem die Messkammer (12) durch einen Rohrleitungsabschnitt (10) gebildet ist, an dessen Außenumfang zwei Ultraschallwandler einander diametral gegenüber liegend als Ultraschallsender (14) und Ultraschallempfänger (16) in direktem Kontakt angebracht sind.

7. Durchflussmesser nach einem der Ansprüche 1 bis 7, bei dem die Verarbeitungseinrichtung einen digitalen Signalprozessor aufweist.

8. Verfahren zur Durchflussmessung gasförmiger Medien, bei dem in einer vom Medium durchströmten Messkammer (12) ein Störkörper (18) angeordnet und stromabwärts von dem Störkörper (18) ein Ultraschall-Erregungssignal quer zur Strömungsrichtung durch die Messkammer (12) geschickt wird, das Ultraschall-Erregungssignal nach Durchquerung der Messkammer (12) gemeinsam mit dem als Körperschall übertragenen Ultraschall-Erregungssignal erfaßt wird, **dadurch gekennzeichnet, dass** das erfaßte Signal erst quadriert und dann mit einem Bandpaßfilter (38) demoduliert wird, wobei aus der Frequenz des demodulierten Signals eine Anzeigegröße für den Durchfluß durch die Messkammer (12) abgeleitet wird.

9. Verfahren nach Anspruch 8, bei dem das erfasste Signal mit einem digitalen Signalprozessor verarbeitet wird.

## Claims

1. A flow meter for gaseous media, comprising a sensor which includes a measuring chamber (12) having a perturbation body (18) arranged therein, an ultrasonic transmitter (14) arranged at the measuring chamber (12) downstream of the perturbation body (18), an ultrasonic receiver (16) arranged at the measuring chamber (12) opposite the ultrasonic transmitter (14), and a signal processing means (35, 36, 38) which processes the measured signal received by the ultrasonic receiver (16), **characterized in that** the signal processing means (35, 36, 38) includes a multiplier (36) which multiplies the measured signal by itself, and a band-pass filter (38) which demodulates the measured signal multiplied by itself.

**2.** The flow meter according to claim 1, in which the ultrasonic transmitter (14) is driven by a transmitter amplifier (40) having an input to which the received signal amplified by a receiving amplifier (34) and coming from the ultrasonic receiver (16) is fed back.

**3.** The flow meter according to claim 2, in which the transmitter amplifier (40) contains a band-pass filter.

**4.** The flow meter according to claim 2 or 3, in which the receiving amplifier (34) contains a band-pass filter.

**5.** The flow meter according to any of claims 2 to 4, comprising a gain control (42) by which the amplitude of the transmitted signal applied to the ultrasonic transmitter (14) is kept constant.

**6.** The flow meter according to any of claims 1 to 5, in which the measuring chamber (12) is constituted by a duct portion (10) having an outer periphery to which two ultrasonic transducers are mounted to lie diametrically opposed to each other and in direct contact as ultrasonic transmitter (14) and ultrasonic receiver (16).

**7.** The flow meter according to any of claims 1 to 7, in which the processing means includes a digital signal processor.

**8.** A method of metering a flow of gaseous media, in which a perturbation body (18) is arranged in a measuring chamber (12) through which the medium flows, and an ultrasonic excitation signal is transmitted through the measuring chamber (12) transverse to the direction of flow downstream of the perturbation body (18), the ultrasonic excitation signal, after having traversed the measuring chamber (12), is captured jointly with the ultrasonic excitation signal transmitted as structure-borne noise, **characterized in that** the captured signal is first squared and then demodulated with a band-pass filter (38), an indication for the flow through the measuring chamber (12) being derived from the frequency of the demodulated signal.

**9.** The method according to claim 8, in which the captured signal is processed by a digital signal processor.

**Revendications**

**1.** Débitmètre pour des fluides gazeux, comportant un capteur qui présente une chambre de mesure (12) dans laquelle est agencé un corps perturbateur (18), un émetteur d'ultrasons (14) qui est agencé dans la chambre de mesure (12) en aval du corps perturbateur (18), un récepteur d'ultrasons (16) qui est agencé à l'opposé de l'émetteur d'ultrasons (14) dans la chambre de mesure (12), et un dispositif de traitement de signaux (35, 36, 38) qui traite les signaux de mesure reçus par le récepteur d'ultrasons (16), **caractérisé en ce que** le dispositif de traitement de signaux (35, 36, 38) comprend un multiplicateur (36) qui multiplie le signal de mesure par lui-même, et un filtre passe-bande (38) par lequel le signal de mesure multiplié par lui-même est démodulé.

**2.** Débitmètre selon la revendication 1, dans lequel l'émetteur d'ultrasons (14) est piloté par un amplificateur d'émission (40) auquel le signal amplifié par un amplificateur de réception (34) et reçu de l'amplificateur d'ultrasons (16) est couplé en rétroaction.

**3.** Débitmètre selon la revendication 2, dans lequel l'amplificateur d'émission (40) comprend un filtre passe-bande.

**4.** Débitmètre selon la revendication 2 ou 3, dans lequel l'amplificateur de réception (34) comprend un filtre passe-bande.

**5.** Débitmètre selon l'une des revendications 2 ou 3, comprenant un réglage de gain (42) par lequel l'amplitude du signal d'émission appliqué à l'émetteur d'ultrasons (14) est maintenue constante.

**6.** Débitmètre selon l'une des revendications 1 à 5, dans lequel la chambre de mesure (12) est formée par un tronçon de conduit tubulaire (10) à la périphérie extérieure duquel sont prévus deux transducteurs d'ultrasons agencés en contact direct diamétralement à l'opposé l'un de l'autre à titre d'émetteur d'ultrasons (14) et de récepteur d'ultrasons (16).

**7.** Débitmètre selon l'une des revendications 1 à 7, dans lequel le dispositif de traitement comprend un processeur numérique de signaux.

8. Procédé pour mesurer le débit de fluides gazeux, dans lequel un corps perturbateur (18) est agencé dans une chambre de mesure (12) traversée par le fluide, et en aval du corps perturbateur (18) un signal d'excitation d'ultrasons est envoyé à travers la chambre de mesure (12) transversalement à la direction d'écoulement, et une fois que le signal d'excitation d'ultrasons a traversé la chambre de mesure (12) il est saisi conjointement avec le signal d'excitation d'ultrasons transmis en tant que bruit de corps, **caractérisé en ce que** le signal saisi est tout d'abord élevé au carré et ensuite démodulé par un filtre passe-bande (38), une grandeur indicative pour le débit à travers la chambre de mesure (12) étant déduite de la fréquence du signal démodulé.

9. Procédé selon la revendication 8, dans lequel le signal saisi est traité avec un processeur numérique de signaux.

Fig. 1

Fig. 2

Phasendifferenz

10
14
22
12
16
20
18
Q

24
26
28
30
r

Fig. 3

Fig. 4

EP 1 635 150 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3601407 A1
- US 20030028334 A1